# EUROPÄISCHE PATENTSCHRIFT

(11) **EP 3 611 383 B1**
(45) Veröffentlichungstag und Bekanntmachung des Hinweises auf die Patenterteilung: **29.12.2021**
(21) Anmeldenummer: 19186688.8
(22) Anmeldetag: 17.07.2019
(51) Int. Cl.: F04D 19/04, F04D 27/02

(54) **DREHZAHLREGELUNG EINES ROTORS EINER VAKUUMPUMPE**
SPEED CONTROL OF A ROTOR OF A VACUUM PUMP
RÉGLAGE DE VITESSE DE ROTATION D'UN ROTOR D'UNE POMPE À VIDE

(43) Veröffentlichungstag der Anmeldung: 19.02.2020
(73) Patentinhaber: PFEIFFER VACUUM GMBH, 35614 Asslar (DE)
(72) Erfinder: Mekota, Mirko, 35630 Ehringshausen (DE); Schweighöfer, Michael, 35641 Schöffengrund (DE)
(74) Vertreter: Manitz Finsterwald Patent- und Rechtsanwaltspartnerschaft mbB

(56) Entgegenhaltungen:
- WO-A1-03/085268
- DE-A1-102013 223 020
- JP-A- 2006 194 094

## Beschreibung

Die Erfindung betrifft ein Verfahren zum Regeln der Drehzahl eines Rotors einer Vakuumpumpe und eine Vakuumpumpe, die eine Regelung der Drehzahl eines Rotors der Vakuumpumpe aufweist.

Um ein möglichst großes Saugvermögen einer Vakuumpumpe, insbesondere einer Turbomolekularpumpe, zu erreichen, wird diese üblicherweise bei einer möglichst hohen Drehzahl betrieben. Aufgrund der Gaslast, die am Einlass der Vakuumpumpe anliegt, tritt jedoch an einem Rotor der Vakuumpumpe eine Gasreibung auf, die zu einer Erhöhung der Temperatur des Rotors führt. Bei hohen Gaslasten kann die Rotortemperatur stark ansteigen, beispielsweise ausgehend von einer Umgebungstemperatur bei etwa 20°C bis 25°C bis in einen Bereich von 90°C bis 120°C.

Für solche erhöhten Temperaturen wird üblicherweise eine Nenndrehzahl für die Vakuumpumpe festgelegt, die von den maximal zulässigen Materialspannungen abhängt, die bei diesen erhöhten Temperaturen in dem Rotor auftreten können.

Die Nenndrehzahl stellt die obere Grenze der Drehzahl des Rotors während des Betriebs der Vakuumpumpe dar. Das heißt, dass die Vakuumpumpe unabhängig von der Temperatur des Rotors höchstens mit der Nenndrehzahl des Rotors betrieben wird. Wenn die Temperatur des Rotors jedoch deutlich unterhalb des vorstehend genannten Temperaturbereichs von 90°C bis 120°C liegt, beispielsweise bei 40°C, könnte die Vakuumpumpe durchaus bei einer Drehzahl des Rotors oberhalb der Nenndrehzahl betrieben werden, wodurch das Saugvermögen der Vakuumpumpe ohne Risiken erhöht werden könnte.

Zusätzlich wird bei bekannten Vakuumpumpen eine kritische Temperatur für den Rotor festgelegt, die beispielsweise in dem vorstehend genannten Bereich von 90°C bis 120°C liegt. Bei Erreichen dieser kritischen Temperatur wird bei den bekannten Vakuumpumpen die Leistung, mit welcher der Rotor angetrieben wird, verringert, um die Vakuumpumpe vor den Folgen einer überhöhten Rotordrehzahl, beispielsweise einer geringfügigen Veränderung in den Abmessungen des Rotors aufgrund eines Kriechens in dessen Material, zu schützen. Bei verringerter Antriebsleistung der Vakuumpumpe können jedoch bei hoher Gaslast Einbrüche in der Drehzahl des Rotors auftreten.

Die Temperatur des Rotors wird bei bekannten Vakuumpumpen nicht direkt gemessen, sondern beispielsweise anhand einer Temperaturmessung an einem geeigneten Gehäuseteil geschätzt. Die geschätzte Temperatur des Rotors wird mit der kritischen Temperatur verglichen, um die Antriebsleistung der Vakuumpumpe zu reduzieren, wenn die geschätzte Temperatur des Rotors im Bereich der kritischen Temperatur liegt. Überschreitet die Temperatur des Rotors die kritische Temperatur um einen vorbestimmten Wert, wird die Antriebsleistung der Vakuumpumpe sogar vollständig abgeschaltet und die Vakuumpumpe somit stillgesetzt.

In der WO 03/085268 A1 sind ein Verfahren zum Regeln der Drehzahl eines Rotors einer Vakuumpumpe und eine entsprechende Vakuumpumpe beschrieben, bei denen eine Temperatur der Vakuumpumpe ermittelt wird, in Abhängigkeit von der ermittelten Temperatur eine maximal zulässige Drehzahl des Rotors ermittelt wird und eine tatsächliche Drehzahl des Rotors in Abhängigkeit von der maximal zulässigen Drehzahl geregelt wird.

Eine Aufgabe der Erfindung besteht darin, ein Verfahren zum Regeln der Drehzahl eines Rotors einer Vakuumpumpe und eine entsprechende Vakuumpumpe zu schaffen, bei denen das Saugvermögen der Vakuumpumpe erhöht wird und gleichzeitig die Betriebssicherheit der Vakuumpumpe gewährleistet ist.

Diese Aufgabe wird durch ein Verfahren mit den Merkmalen des Anspruchs 1 gelöst. Das Verfahren dient zum Regeln der Drehzahl eines Rotors einer Vakuumpumpe und umfasst, dass zunächst eine Temperatur des Rotors der Vakuumpumpe ermittelt wird. In Abhängigkeit von der Temperatur des Rotors wird eine maximal zulässige Drehzahl des Rotors ermittelt, und eine tatsächliche Drehzahl des Rotors wird in Abhängigkeit von der maximal zulässigen Drehzahl geregelt.

Für die Regelung der tatsächlichen Drehzahl des Rotors wird somit im Gegensatz zum Stand der Technik keine feste Nenndrehzahl als Sollwert vorgegeben, die unabhängig von der tatsächlichen Temperatur des Rotors gültig ist und anhand der maximal zu erwartenden Rotortemperatur festgelegt wird. Stattdessen erfolgt die Regelung der tatsächlichen Drehzahl des Rotors erfindungsgemäß mit einem variablen Sollwert, der anhand der temperaturabhängigen, maximal zulässigen Drehzahl ermittelt wird.

Somit kann die Vakuumpumpe erfindungsgemäß während eines Großteils ihrer Betriebsdauer bei einer tatsächlichen Drehzahl oberhalb der Nenndrehzahl, die bei bekannten Vakuumpumpen zur Regelung verwendet wird, betrieben werden, da die ermittelte tatsächliche Temperatur des Rotors während des größten Teils der Betriebsdauer unterhalb des kritischen Temperaturbereichs von beispielsweise 90°C bis 120°C liegt. Durch einen solchen Betrieb oberhalb der Nenndrehzahl wird das Saugvermögen der Vakuumpumpe erhöht, da das Saugvermögen mit der Drehzahl des Rotors zunimmt.

Da die maximal zulässige Drehzahl des Rotors in Abhängigkeit von der ermittelten momentanen Temperatur des Rotors festgelegt wird, existiert für diese Temperatur eine temperaturabhängige Obergrenze für die Drehzahl des Rotors. Dadurch wird sichergestellt, dass die Vakuumpumpe bei der jeweiligen ermittelten Temperatur nicht mit übermäßig hohen Drehzahlen betrieben wird. Folglich wird durch die temperaturabhängige maximal zulässige Drehzahl des Rotors die Betriebssicherheit der Vakuumpumpe aufrechterhalten.

Die maximal zulässige Drehzahl des Rotors wird unter Berücksichtigung einer maximal zulässigen Materialspannung des Rotors ermittelt, die von der Temperatur des Rotors abhängt. Diese temperaturabhängige maximal zulässige Materialspannung liegt deutlich unterhalb der Fließgrenze des Rotormaterials und wird derart festgelegt, dass auch bei längerem Betrieb der Vakuumpumpe, beispielsweise über mehrere Jahre, kein Kriechen des Materials im Rotor auftreten kann. Beispielsweise wird die maximal zulässige Materialspannung des Rotors derart festgelegt, dass sie für eine gegebene Temperatur des Rotors etwa bei der Hälfte der Kriechfestigkeit des Materials des Rotors liegt.

Da die Kriechfestigkeit des Rotormaterials mit zunehmender Temperatur abnimmt, erfolgt die Festlegung der maximal zulässigen Materialspannung des Rotors im einfachsten Fall derart, dass sie mit zunehmender Temperatur linear abnimmt. Da die Materialspannung quadratisch mit der Rotordrehzahl zunimmt, nimmt die maximal zulässige Drehzahl des Rotors, die zur Regelung der tatsächlichen Drehzahl des Rotors verwendet wird, vorzugsweise ebenfalls quadratisch mit abnehmender Temperatur zu, wenn ein linearer Zusammenhang zwischen der Materialspannung und der Temperatur vorausgesetzt wird. Gemäß alternativen Ausführungsformen kann die Temperaturabhängigkeit der maximal zulässigen Materialspannung des Rotors jedoch auch mittels einer nichtlinearen Funktion festgelegt werden, beispielsweise anhand einer exponentiellen Abnahme der Kriechfestigkeit mit der Temperatur.

Durch die Berücksichtigung der maximal zulässigen Materialspannung des Rotors bei der Ermittlung der maximal zulässigen Drehzahl wird die Betriebssicherheit der Vakuumpumpe gewährleistet, insbesondere für längere Betriebsdauern, wenn die maximal zulässige Materialspannung deutlich unterhalb der Kriechfestigkeit für die jeweilige Temperatur liegt. Da die maximal zulässige Drehzahl des Rotors jedoch weiterhin von der ermittelten Temperatur des Rotors abhängt, wird auch bei dieser Ausführungsform der Drehzahlbereich oberhalb der Nenndrehzahl, die für Vakuumpumpen gemäß dem Stand der Technik die Obergrenze der Rotordrehzahl darstellt, zur Verbesserung des Saugvermögens der Vakuumpumpe ausgenutzt. Dies gilt insbesondere bei Temperaturen deutlich unterhalb der vorstehend genannten kritischen Temperaturen von 90°C bis 120°C, d.h. bei Betriebstemperaturen von etwa 40°C bis 50°C, bei denen der Rotor der Vakuumpumpe üblicherweise über lange Zeiträume betrieben wird.

Vorteilhafte Weiterbildungen der Erfindung sind in den Unteransprüchen, der nachstehenden Beschreibung und in den Figuren angegeben.

Gemäß einer Ausführungsform wird die tatsächliche Drehzahl des Rotors auf die maximal zulässige Drehzahl des Rotors geregelt. Die maximal zulässige Drehzahl wird somit als Sollwert bei der Regelung der tatsächlichen Drehzahl verwendet. Für die ermittelte momentane Temperatur des Rotors wird durch die Regelung auf die maximal zulässige Drehzahl ein maximal mögliches Saugvermögen der Vakuumpumpe erreicht.

Bevorzugt wird die Temperatur des Rotors direkt an dem Rotor erfasst. Dies kann beispielsweise mittels eines Infrarotsensors erfolgen, der an einem Stator der Vakuumpumpe angebracht ist und bezüglich des Rotors derart ausgerichtet ist, dass der Infrarotsensor die Infrarotstrahlung misst, die von dem Rotor emittiert wird. Durch die direkte Erfassung der Rotortemperatur wird die Genauigkeit bei der Ermittlung der Temperatur des Rotors verbessert, da keine weiteren Messgrößen oder Annahmen zur Ermittlung der Temperatur erforderlich sind.

Alternativ kann die Temperatur des Rotors indirekt geschätzt werden, insbesondere durch eine Messung der Temperatur an einem Unterteil und/oder an einem Lager der Vakuumpumpe. Bei dieser Ausführungsform können bereits vorhandene Bauelemente der Vakuumpumpe verwendet werden, um die Temperatur des Rotors zu schätzen, beispielsweise Temperatursensoren an Gehäuseelementen oder Lagern. Es sind somit keine zusätzlichen Einrichtungen zur direkten Erfassung der Temperatur des Rotors notwendig. Daher ist bei dieser Ausführungsform die Nachrüstung existierender Vakuumpumpen mit der erfindungsgemäßen temperaturabhängigen Regelung der Drehzahl des Rotors möglich, indem bereits vorhandene Messsignale der Temperatur innerhalb der Vakuumpumpe zur Schätzung der Rotortemperatur verwendet werden und die Steuerung der tatsächlichen Drehzahl des Rotors unter Berücksichtigung dieser Messsignale erweitert wird.

Gemäß einer weiteren Ausführungsform des Verfahrens wird eine Zeitdauer definiert, für welche eine Überschreitung der maximal zulässigen Drehzahl des Rotors durch die tatsächliche Drehzahl des Rotors tolerierbar ist. Der Rotor wird bei dieser Ausführungsform kumuliert solange mit einer Drehzahl oberhalb der maximal zulässigen Drehzahl betrieben, bis die definierte Zeitdauer verstrichen ist. Der Rotor wird dabei insbesondere kumuliert über eine definierte Zeitdauer oberhalb der maximal zulässigen Drehzahl betrieben, wobei die definierte Zeitdauer kürzer als eine kritische Zeitdauer ist, bei der eine kritische Maßänderung des Rotors durch Kriechen auftreten kann.

Durch den Betrieb des Rotors mit einer Drehzahl oberhalb der maximal zulässigen Drehzahl wird das Saugvermögen der Vakuumpumpe innerhalb der definierten Zeitdauer weiter gesteigert. Der Druck in einem Rezipienten, mit dem die Vakuumpumpe verbunden ist, wird folglich bei dieser Ausführungsform im Vergleich zu einem Betrieb bei oder unterhalb der maximal zulässigen Drehzahl zusätzlich verringert. Die Vakuumpumpe erzeugt somit während der definierten Zeitdauer einen maximal möglichen Unterdruck im Rezipienten.

Die Betriebsweise gemäß dieser Ausführungsform kann beispielsweise dann wünschenswert sein, wenn aufgrund von bestimmten Vorgängen im Rezipienten eine erhöhte Gaslast an der Vakuumpumpe zu erwarten ist, die aufgrund der erhöhten Gasreibung zu einer Erhöhung der Temperatur des Rotors der Vakuumpumpe führt. Ungeachtet dieser Temperaturerhöhung kann es wünschenswert sein, die Vakuumbedingungen im Rezipienten bei dem Auftreten der erhöhten Gaslast beizubehalten, indem die Drehzahl des Rotors der Vakuumpumpe aufrechterhalten wird und daher eine mögliche Verringerung der Drehzahl auf oder unter die mit zunehmender Temperatur abnehmende maximal zulässige Drehzahl verhindert wird. Durch das Aufrechterhalten der Drehzahl des Rotors wird ein übermäßiger Anstieg des Drucks im Rezipienten aufgrund der Verringerung der Drehzahl verhindert.

Die definierte Zeitdauer, für die eine Überschreitung der maximal zulässigen Drehzahl des Rotors toleriert wird, liegt dabei typischerweise im Bereich von Tagen oder höchstens einer oder weniger Wochen. Die definierte Zeitdauer ist in jedem Fall sehr klein im Vergleich zur gesamten Betriebsdauer bzw. Lebensdauer der Vakuumpumpe, die üblicherweise mehrere Jahre oder sogar Jahrzehnte beträgt. Durch eine solche Beschränkung der definierten Zeitdauer, d.h. auf den Bereich von Tagen oder Wochen, wird verhindert, dass langfristig eine Beschädigung des Rotors der Vakuumpumpe auftritt, beispielsweise durch ein Kriechen des Materials des Rotors, das zu einer Unwucht des Rotors führen kann.

Gemäß einer Weiterbildung wird für die Vakuumpumpe eine Gesamtdauer für einen Betrieb des Rotors oberhalb der maximal zulässigen Drehzahl ermittelt, indem die jeweilige Zeitdauer akkumuliert wird, während der ein Betrieb oberhalb der maximal zulässigen Drehzahl erfolgt. Wenn diese Gesamtdauer eine vorbestimmte Maximaldauer überschreitet, wird eine Warn- oder Fehlermeldung ausgegeben.

Die Warn- oder Fehlermeldung kann mit einer Empfehlung verbunden sein, dass der Rotor der Vakuumpumpe ausgetauscht werden sollte.

Durch den Vergleich der Gesamtdauer für den Betrieb des Rotors oberhalb der maximal zulässigen Drehzahl mit der vorbestimmten Maximaldauer und die entsprechende Fehlermeldung wird verhindert, dass die Vakuumpumpe für eine zu große Zeitdauer mit einer übermäßig hohen Drehzahl betrieben wird. Für den weiteren Betrieb des Rotors, insbesondere bei übermäßig hohen Drehzahlen, kann die notwendige Betriebssicherheit der Vakuumpumpe möglicherweise nicht mehr garantiert werden. Diese Weiterbildung der Erfindung dient somit zur Absicherung des Betriebs der Vakuumpumpe.

Weiterer Gegenstand der Erfindung ist eine Vakuumpumpe, bei der es sich insbesondere um eine Turbomolekularpumpe handelt und die einen Rotor aufweist, der zusammen mit einem Stator eine pumpaktive Einheit der Vakuumpumpe bildet. Die Vakuumpumpe umfasst ferner eine Einrichtung zur Ermittlung einer Temperatur des Rotors und eine Einrichtung zur Regelung der Drehzahl des Rotors, welche ausgebildet ist, um eine von der Einrichtung zur Ermittlung der Temperatur des Rotors ermittelte Temperatur des Rotors zu empfangen, eine maximal zulässige Drehzahl des Rotors in Abhängigkeit von der Temperatur des Rotors zu ermitteln und eine tatsächliche Drehzahl des Rotors in Abhängigkeit von der maximal zulässigen Drehzahl zu regeln.

Die für das erfindungsgemäße Verfahren vorstehend genannten Vorteile gelten ebenso für die erfindungsgemäße Vakuumpumpe. Insbesondere ist das Saugvermögen der erfindungsgemäßen Vakuumpumpe im Vergleich zu bekannten Vakuumpumpen erhöht, da die erfindungsgemäße Vakuumpumpe aufgrund der Regelung mittels der temperaturabhängigen maximal zulässigen Drehzahl mit Drehzahlen des Rotors betrieben werden kann, die oberhalb der Nenndrehzahlen liegen, mit denen bekannte Vakuumpumpen betrieben werden.

Die Einrichtung zur Regelung der Drehzahl des Rotors umfasst eine Kennlinie, welche die Temperatur des Rotors mit einer maximal zulässigen Materialspannung des Rotors in Beziehung setzt, und ist ferner ausgebildet, um die maximal zulässige Drehzahl des Rotors unter Berücksichtigung der maximal zulässigen Materialspannung des Rotors zu ermitteln. Aufgrund der Berücksichtigung der maximal zulässigen Materialspannung des Rotors über die Kennlinie zur Regelung der Drehzahl wird die Betriebssicherheit der erfindungsgemäßen Vakuumpumpe verbessert.

Bevorzugt umfasst die Vakuumpumpe ferner einen Temperatursensor, beispielsweise einen an dem Stator angebrachten und auf den Rotor ausgerichteten Infrarotsensor, zur direkten Messung der Temperatur an dem Rotor. Alternativ kann die Vakuumpumpe ein Modul zur Schätzung der Temperatur des Rotors aus Signalen eines Temperatursensors zur Messung der Temperatur an einem Unterteil und/oder an einem Lager der Vakuumpumpe umfassen. Eine direkte Messung der Temperatur am Rotor verbessert die Genauigkeit bei der Ermittlung der Rotortemperatur, während eine indirekte Schätzung die Verwendung bereits vorhandener Messsignale der Vakuumpumpe gestattet und keinen zusätzlichen Temperatursensor erfordert.

Gemäß einer Ausführungsform umfasst die Vakuumpumpe ferner einen Timer, der eine Zeitdauer definiert, für welche eine Überschreitung der maximal zulässigen Drehzahl des Rotors durch die tatsächliche Drehzahl des Rotors tolerierbar ist. Die Einrichtung zur Regelung der Drehzahl des Rotors ist bei dieser Ausführungsform ausgebildet, um den Rotor solange mit einer Drehzahl oberhalb der maximal zulässigen Drehzahl zu betreiben, bis der Timer abgelaufen ist. Während der definierten Zeitdauer kann das Saugvermögen der Vakuumpumpe weiter erhöht werden, da der Rotor der Vakuumpumpe mit einer Drehzahl oberhalb der maximal zulässigen Drehzahl betrieben wird. Mittels des Timers wird die Zeitdauer für diese Betriebsweise jedoch begrenzt, so dass die Betriebssicherheit der Vakuumpumpe weiterhin gewährleistet ist.

Die Zeitdauer ist dabei insbesondere kürzer als eine kritische Zeitdauer definiert, bei welcher eine kritische Maßänderung des Rotors durch Kriechen auftreten kann.

Gemäß einer Weiterbildung umfasst die Vakuumpumpe ferner eine Speichereinrichtung, welche die jeweilige Zeitdauer akkumuliert, während der ein Betrieb des Rotors oberhalb der maximal zulässigen Drehzahl erfolgt, um eine Gesamtdauer für den Betrieb des Rotors oberhalb der maximal zulässigen Drehzahl zu ermitteln. Die Gesamtdauer ist somit die Summe über die Zeitdauern mit einer Drehzahl des Rotors oberhalb der maximal zulässigen Drehzahl. Die Einrichtung zur Steuerung der Drehzahl des Rotors ist bei dieser Weiterbildung ferner ausgebildet, um eine Warn- oder Fehlermeldung auszugeben, wenn die Gesamtdauer eine vorbestimmte Maximaldauer überschreitet. Die Warn- oder Fehlermeldung kann mit einem Hinweis verbunden sein, dass der Rotor der Vakuumpumpe ausgetauscht werden sollte. Diese Weiterbildung dient somit zur Absicherung des Betriebs der Vakuumpumpe, da ein übermäßig langer Betrieb bei einer Drehzahl oberhalb der maximal zulässigen Drehzahl verhindert wird.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6A: eine schematische Darstellung einer Ausführungsform einer erfindungsgemäßen Turbomolekularpumpe,
- Fig. 6B: eine schematische Darstellung einer alternativen Ausführungsform der erfindungsgemäßen Turbomolekularpumpe,
- Fig. 7: ein schematisches Diagramm der maximal zulässigen Materialspannung eines Rotors der erfindungsgemäßen Turbomolekularpumpe über der Rotortemperatur und
- Fig. 8: Kennlinien einer maximal zulässigen Rotordrehzahl über der Rotortemperatur.

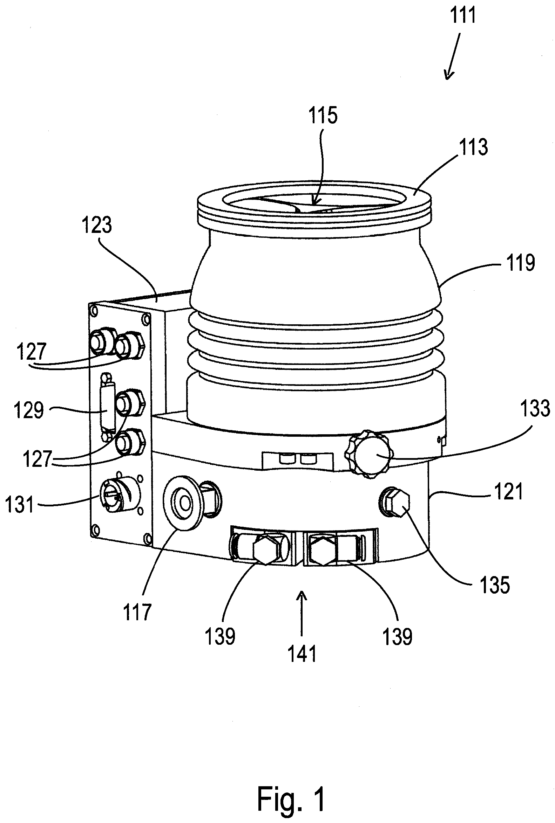

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

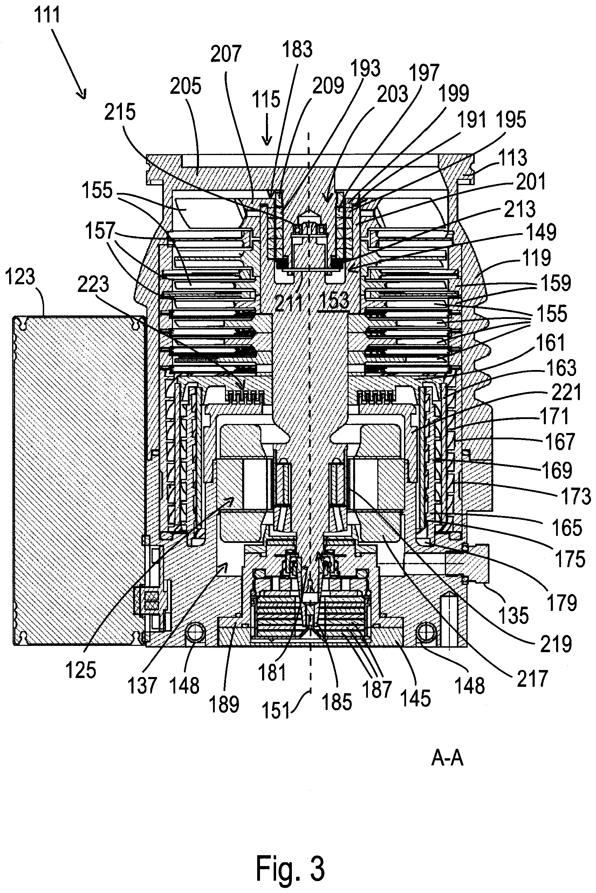

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

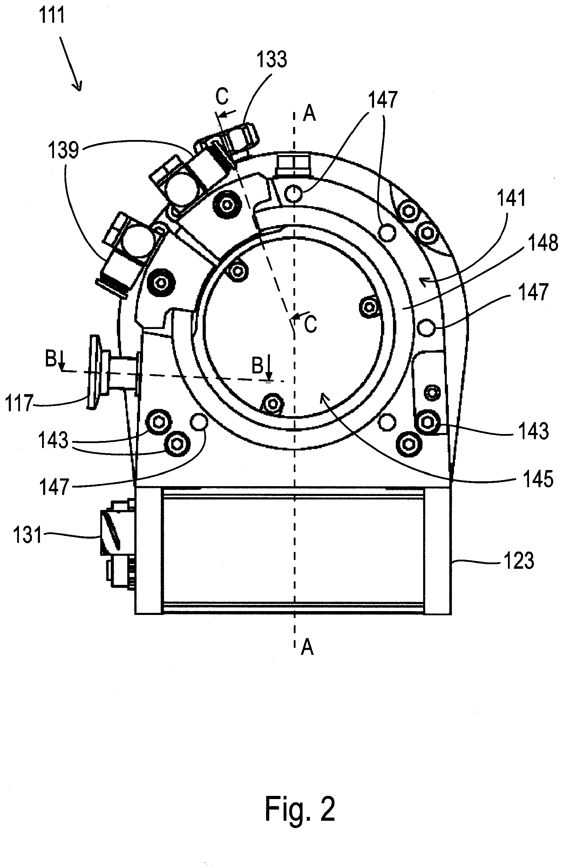

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

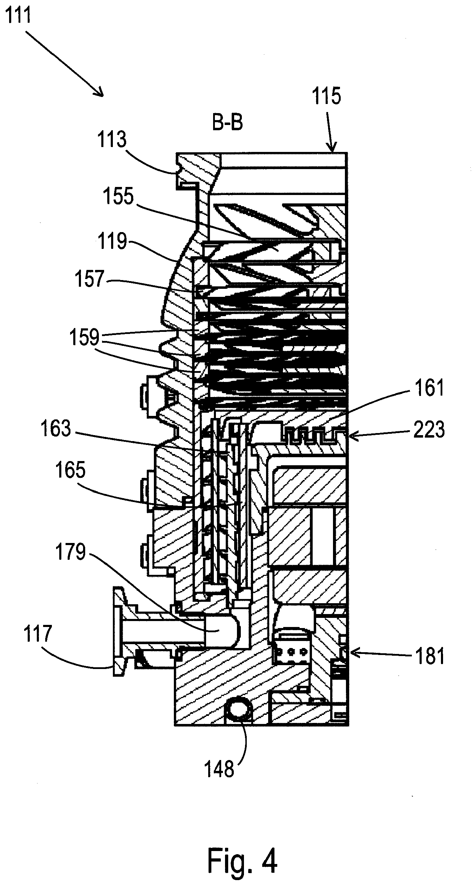

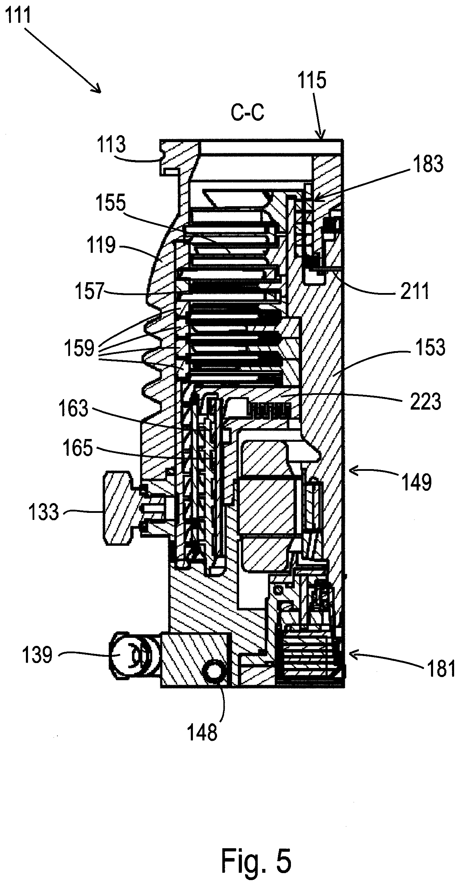

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

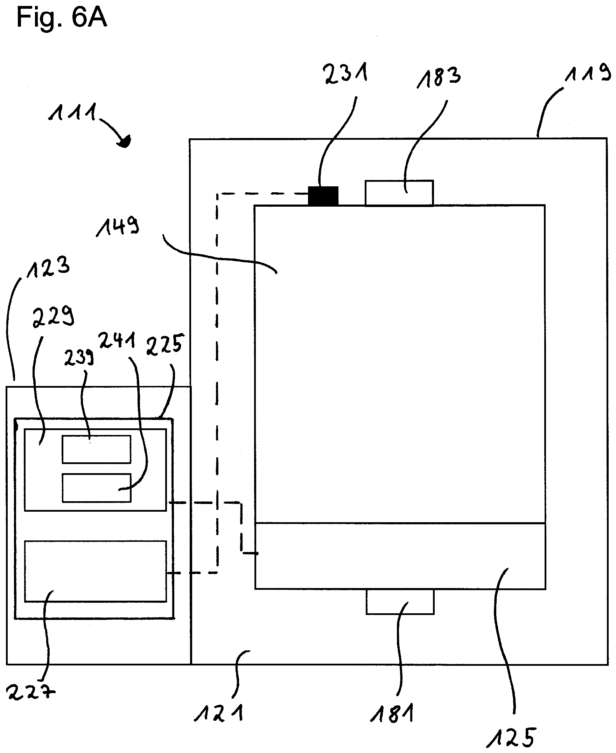

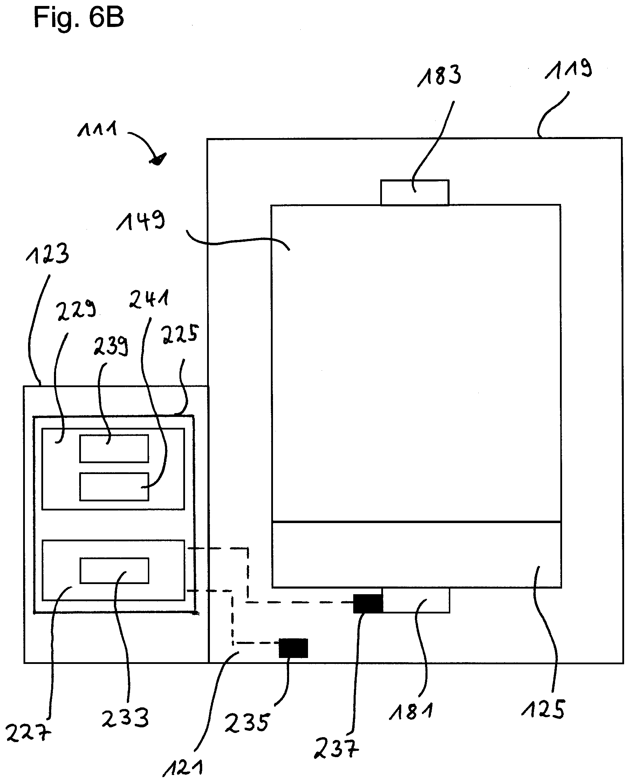

Fig. 6A zeigt eine vereinfachte schematische Darstellung einer erfindungsgemäßen Turbomolekularpumpe 111. Die Turbomolekularpumpe 111 umfasst sämtliche Bauelemente und Merkmale, die in Fig. 1 bis 5 dargestellt und vorstehend beschrieben sind, auch wenn der größte Teil dieser Bauelemente und Merkmale in Fig. 6 zur besseren Übersichtlichkeit nicht gezeigt ist.

Die Turbomolekularpumpe 111 umfasst zusätzlich eine Steuereinrichtung 225, die in dem Elektronikgehäuse 123 untergebracht ist. Die Steuereinrichtung 225 umfasst eine Einrichtung 227 zur Ermittlung der Temperatur des Rotors 149 und eine Einrichtung 229 zur Regelung der Drehzahl des Rotors 149. Die Einrichtung zur Regelung der Drehzahl des Rotors 149 ist mit dem Elektromotor 125 verbunden, um die Drehzahl des Rotors 149 mittels der Ströme und Spannungen zu regeln, die dem Elektromotor 125 zugeführt werden bzw. an diesem anliegen.

Bei der Ausführungsform, die in Fig. 6A gezeigt ist, ist die Einrichtung 227 zur Ermittlung der Temperatur des Rotors 149 mit einem Infrarotsensor 231 verbunden, der zur direkten Messung der Temperatur an dem Rotor 149 vorgesehen ist. Eine alternative Ausführungsform, die in Fig. 6B dargestellt ist, umfasst keinen Infrarotsensor 231 zur direkten Messung der Temperatur des Rotors 149. Stattdessen umfasst die Einrichtung 227 zur Ermittlung der Temperatur des Rotors 149 ein Modul 233 zur Schätzung der Temperatur des Rotors 149 aus Signalen eines Temperatursensors 235 zur Messung der Temperatur an dem Unterteil 121 der Turbomolekularpumpe 111 und/oder eines Temperatursensors 237 zur Messung der Temperatur an dem Wälzlager 181. Ansonsten ist die Ausführungsform der Turbomolekularpumpe 111 von Fig. 6B mit derjenigen von Fig. 6A identisch.

Bei beiden Ausführungsformen, die in Fig. 6A und 6B dargestellt sind, wird die momentan im Rotor 149 vorliegende Temperatur mittels der Einrichtung 227 ermittelt, d.h. entweder direkt anhand einer Messung mittels des Infrarotsensors 231 oder indirekt anhand einer Schätzung aus Messsignalen der Temperatursensoren 235 und/oder 237. Die ermittelte Temperatur des Rotors 149 wird von der Einrichtung 229 zur Regelung der Drehzahl des Rotors 149 empfangen, die für die ermittelte Temperatur eine maximal zulässige Drehzahl des Rotors 149 ermittelt. Die Einrichtung 229 regelt die tatsächliche Drehzahl des Rotors 149 anschließend auf die maximal zulässige Drehzahl, d.h. diese dient als Sollwert der Regelung.

Die Einrichtung 229 zur Regelung der Drehzahl des Rotors 149 umfasst ferner einen Timer 239 und eine Speichereinrichtung 241. Der Timer 239 definiert eine Zeitdauer, für die eine Überschreitung der maximal zulässigen Drehzahl des Rotors durch die tatsächliche Drehzahl tolerierbar ist. Die Einrichtung 229 zur Regelung der Drehzahl des Rotors 149 kann den Rotor 149 solange mit einer Drehzahl oberhalb der maximal zulässigen Drehzahl betreiben, bis der Timer 239 abgelaufen ist. Anschließend wird die tatsächliche Drehzahl des Rotors 149 auf die maximal zulässige Drehzahl verringert.

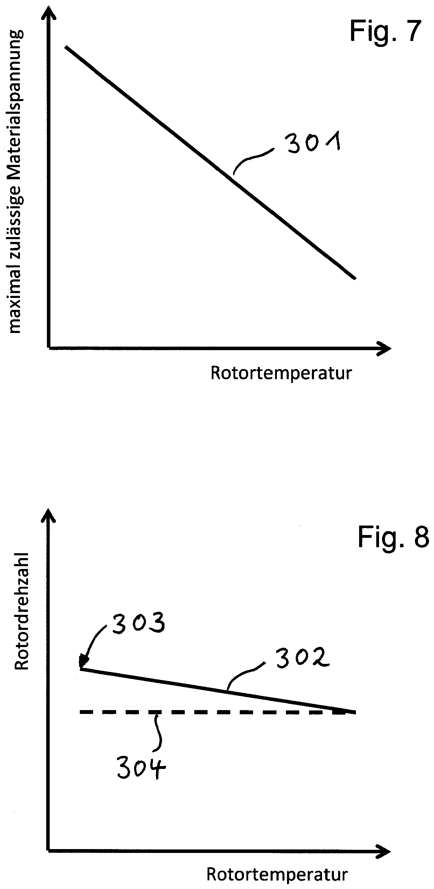

Die durch den Timer 239 definierte Zeitdauer ist durch den Hersteller der Turbomolekularpumpe 111 variabel einstellbar und kann im Bereich von Tagen bis hin zu einer oder einigen Wochen liegen. Die Zeitdauer kann beispielsweise an Vorgänge in einem Rezipienten angepasst werden, mit dem die Turbomolekularpumpe 111 über den Einlassflansch 113 verbunden ist. Für solche Vorgänge im Rezipienten kann es wünschenswert sein, das Saugvermögen der Turbomolekularpumpe 111 durch eine maximal mögliche Drehzahl des Rotors 149 während des gesamten Vorgangs aufrechtzuerhalten, selbst wenn zu erwarten ist, dass die Temperatur des Rotors 149 ansteigen wird. Dabei ist die tatsächliche Drehzahl des Rotors 149 jedoch auf eine maximale Betriebsdrehzahl 303 (vgl. Fig. 8) begrenzt, die anhand der gewünschten Lebensdauer der Turbomolekularpumpe 111 und der zu erwartenden Betriebstemperaturen und den mit diesen verbundenen Materialspannungen innerhalb des Rotors 149 anhand von Erfahrungswerten festgelegt wird.

Um einen übermäßig langen Betrieb der Turbomolekularpumpe 111 oberhalb der maximal zulässigen Drehzahl zu verhindern, ist in der Speichereinrichtung 241 eine vorbestimmte Maximaldauer hinterlegt. Außerdem akkumuliert die Speichereinrichtung 241 die jeweilige Zeitdauer, während der ein Betrieb des Rotors 149 oberhalb der maximal zulässigen Drehzahl erfolgt. Die durch die Speichereinrichtung 241 akkumulierte Zeitdauer, d.h. die Summe über alle Zeitdauern mit Betrieb des Rotors oberhalb der maximal zulässigen Drehzahl, stellt eine Gesamtdauer für diesen Betrieb oberhalb der maximal zulässigen Drehzahl dar, welche die vorbestimmte Maximaldauer nicht überschreiten darf, die in der Speichereinrichtung 241 abgelegt ist. Sobald die Gesamtdauer, d.h. die durch die Speichereinrichtung 241 akkumulierte Zeitdauer, die vorbestimmte Maximaldauer überschreitet, gibt die Steuereinrichtung 225 eine Warn- oder Fehlermeldung aus. Die Warn- oder Fehlermeldung ist mit einem Hinweis verbunden, dass der Betrieb der Turbomolekularpumpe 111 gestoppt und der Rotor 149 ausgetauscht werden sollte, da ein sicherer Betrieb der Turbomolekularpumpe 111 nicht mehr gewährleistet ist. So besteht aufgrund der Überschreitung der vorbestimmten Maximaldauer für den Betrieb mit übermäßig hoher Drehzahl beispielsweise die Gefahr, dass ein derartiges Kriechen im Material des Rotors 149 auftritt, das eine Unwucht oder sogar eine Beschädigung des Rotors 149 oder weiterer Teile der Turbomolekularpumpe 111 aufgrund einer Veränderung in den Abmessungen des Rotors 149 auftreten kann.

Fig. 7 zeigt eine Kennlinie 301 der maximal zulässigen Materialspannung in dem Rotor 149, die von der Temperatur des Rotors 149 abhängt. Der Einfachheit halber wird hier eine lineare Funktion für die Abhängigkeit der maximal zulässigen Materialspannung von der Temperatur des Rotors 149 verwendet. Alternativ kann auch ein nichtlinearer Verlauf der maximal zulässigen Materialspannung mit der Temperatur des Rotors 149 verwendet werden, welcher beispielsweise die Temperaturabhängigkeit für die Kriechfestigkeit des Materials in dem Rotor 149 widerspiegelt.

Die in Fig. 7 dargestellte Kennlinie 301 der maximal zulässigen Materialspannung in dem Rotor 149 bildet die Grundlage für eine weitere Kennlinie 302 der maximal zulässigen Drehzahl des Rotors 149, die ebenfalls von der Temperatur des Rotors 149 abhängt. Die Kennlinie 302, die in Fig. 8 dargestellt ist, ist zusammen mit der Kennlinie 301 in der Speichereinrichtung 241 abgelegt, um von der Einrichtung 229 (vgl. Fig. 6) zur Regelung der Drehzahl des Rotors 149 verwendet zu werden.

Da die Kennlinie 301 der maximal zulässigen Materialspannung linear mit der Temperatur des Rotors 149 abnimmt und die maximal zulässige Materialspannung quadratisch von der Rotordrehzahl abhängt, sollte die maximal zulässige Drehzahl quadratisch mit abnehmender Temperatur zunehmen bzw. quadratisch mit zunehmender Temperatur abnehmen. Zur Vereinfachung wird dennoch als Kennlinie 302 für die maximal zulässige Drehzahl (vgl. Fig. 8) ausgehend von einer Nenndrehzahl 304 eine lineare Funktion verwendet. Die Nenndrehzahl 304 wird anhand der maximal zulässigen Materialspannung in dem Rotor 149 im Bereich einer kritischen Temperatur von etwa 90°C bis 120°C ermittelt, um den Betrieb der Turbomolekularpumpe auch bei Erreichen solcher Temperaturen abzusichern. Die konstante Steigung der Kennlinie 302 wird entsprechend derart festgelegt, dass die Kennlinie zur weiteren Absicherung des Betriebs der Turbomolekularpumpe stets unterhalb einer entsprechenden quadratischen Funktion liegt, die sich anhand des quadratischen Zusammenhangs zwischen maximal zulässiger Materialspannung und Drehzahl ableiten lässt.

Die Kennlinie 302 für die maximal zulässige Drehzahl des Rotors 149 nimmt somit linear mit dessen Temperatur ab. Bei niedrigen Temperaturen, beispielsweise bei 40°C bis 50°C, erreicht die Kennlinie 302 für die maximal zulässige Drehzahl eine maximale Betriebsdrehzahl 303. Bei hohen Temperaturen des Rotors 149 hingegen, d.h. bei etwa 90°C bis 120°C, nähert sich die Kennlinie 302 der Nenndrehzahl 304 an, die bei bekannten Turbomolekularpumpen unabhängig von der Temperatur des Rotors zur Regelung der Drehzahl des Rotors verwendet wird und daher für alle Rotortemperaturen konstant ist.

Wie in Fig. 8 anhand des Vergleichs der Kennlinie 302 mit der konstanten Nenndrehzahl 304 zu erkennen ist, gestattet die erfindungsgemäße Turbomolekularpumpe 111 einen Betrieb bei höheren Drehzahlen des Rotors 149 als bei bekannten, mit der Nenndrehzahl 304 betriebenen Turbomolekularpumpen, solange die ermittelte Temperatur des Rotors 149 unterhalb des kritischen Bereichs von etwa 90°C bis 120°C liegt. Aufgrund der erhöhten Drehzahl des Rotors 149 weist die erfindungsgemäße Turbomolekularpumpe 111 daher im Vergleich zu bekannten Turbomolekularpumpen ein erhöhtes Saugvermögen auf.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung
- 225: Steuereinrichtung
- 227: Einrichtung zur Ermittlung einer Temperatur des Rotors
- 229: Einrichtung zur Regelung der Drehzahl des Rotors
- 231: Infrarotsensor
- 233: Modul zur Schätzung der Temperatur des Rotors
- 235: Temperatursensor am Unterteil
- 237: Temperatursensor am Wälzlager
- 239: Timer
- 241: Speichereinrichtung
- 301: Kennlinie der maximal zulässigen Materialspannung
- 302: Kennlinie der maximal zulässigen Drehzahl des Rotors
- 303: maximale Betriebsdrehzahl
- 304: Nenndrehzahl

## Patentansprüche

1. Verfahren zum Regeln der Drehzahl eines Rotors (149) einer Vakuumpumpe (111), umfassend, dass
eine Temperatur des Rotors (149) ermittelt wird,
eine maximal zulässige Drehzahl (302) des Rotors (149) in Abhängigkeit von der Temperatur des Rotors (149) ermittelt wird und
eine tatsächliche Drehzahl des Rotors in Abhängigkeit von der maximal zulässigen Drehzahl (302) geregelt wird,
wobei die maximal zulässige Drehzahl (302) des Rotors (149) unter Berücksichtigung einer von der Temperatur des Rotors (149) abhängigen maximal zulässigen Materialspannung (301) des Rotors (149) ermittelt wird.

2. Verfahren nach Anspruch 1,
wobei die tatsächliche Drehzahl des Rotors (149) auf die maximal zulässige Drehzahl (302) des Rotors (149) geregelt wird.

3. Verfahren nach Anspruch 1 oder 2,
wobei die Temperatur des Rotors (149) direkt an dem Rotor (149) erfasst wird.

4. Verfahren nach Anspruch 1 oder 2,
wobei die Temperatur des Rotors (149) indirekt geschätzt wird, insbesondere durch eine Messung der Temperatur an einem Unterteil (121) und/oder an einem Lager (181) der Vakuumpumpe (111).

5. Verfahren nach einem der vorstehenden Ansprüche, wobei
eine Zeitdauer definiert wird, für welche eine Überschreitung der maximal zulässigen Drehzahl (302) des Rotors (149) durch die tatsächliche Drehzahl des Rotors (149) tolerierbar ist, und
der Rotor (149) kumuliert solange mit einer Drehzahl oberhalb der maximal zulässigen Drehzahl (302) betrieben wird, bis die definierte Zeitdauer verstrichen ist.

6. Verfahren nach Anspruch 5, wobei
eine Gesamtdauer eines Betriebs des Rotors (149) oberhalb der maximal zulässigen Drehzahl (302) ermittelt wird, indem die jeweilige Zeitdauer akkumuliert wird, während der ein Betrieb oberhalb der maximal zulässigen Drehzahl (302) erfolgt, und
eine Warn- oder Fehlermeldung ausgegeben wird, wenn die Gesamtdauer eine vorbestimmte Maximaldauer überschreitet.

7. Vakuumpumpe (111), insbesondere Turbomolekularpumpe, mit
einem Rotor (149), der zusammen mit einem Stator eine pumpaktive Einheit der Vakuumpumpe (111) bildet,
einer Einrichtung (227) zur Ermittlung einer Temperatur des Rotors (149),
einer Einrichtung (229) zur Regelung der Drehzahl des Rotors (149), die ausgebildet ist, um:
eine von der Einrichtung (227) zur Ermittlung der Temperatur des Rotors ermittelte Temperatur des Rotors (149) zu empfangen,
eine maximal zulässige Drehzahl (302) des Rotors (149) in Abhängigkeit von der Temperatur des Rotors (149) zu ermitteln,
eine tatsächliche Drehzahl des Rotors (149) in Abhängigkeit von der maximal zulässigen Drehzahl (302) zu regeln, wobei
die Einrichtung (229) zur Regelung der Drehzahl des Rotors (149) eine Kennlinie (301) umfasst, welche die Temperatur des Rotors (149) mit einer maximal zulässigen Materialspannung des Rotors (149) in Beziehung setzt, und
die Einrichtung (229) zur Regelung der Drehzahl des Rotors (149) ausgebildet ist, um die maximal zulässige Drehzahl (302) des Rotors (149) unter Berücksichtigung der maximal zulässigen Materialspannung des Rotors (149) zu ermitteln.

8. Vakuumpumpe (111) nach Anspruch 7,
ferner einen Temperatursensor (231) zur direkten Messung der Temperatur an dem Rotor (149) umfassend.

9. Vakuumpumpe (111) nach Anspruch 7,
ferner ein Modul (233) zur Schätzung der Temperatur des Rotors (149) aus Signalen eines Temperatursensors (235) zur Messung der Temperatur an einem Unterteil (121) und/oder an einem Lager (181) der Vakuumpumpe (111) umfassend.

10. Vakuumpumpe (111) nach einem der Ansprüche 7 bis 9,
ferner einen Timer (239) umfassend, der eine Zeitdauer definiert, für welche eine Überschreitung der maximal zulässigen Drehzahl (302) des Rotors (149) durch die tatsächliche Drehzahl des Rotors (149) tolerierbar ist,
wobei die Einrichtung (229) zur Regelung der Drehzahl des Rotors (149) ausgebildet ist, um den Rotor (149) solange mit einer Drehzahl oberhalb der maximal zulässigen Drehzahl (302) zu betreiben, bis der Timer (239) abgelaufen ist.

11. Vakuumpumpe (111) nach Anspruch 10, wobei die Zeitdauer kürzer als eine kritische Zeitdauer definiert ist, bei welcher eine kritische Maßänderung des Rotors (149) durch Kriechen auftritt.

12. Vakuumpumpe (111) nach Anspruch 10 oder 11,
ferner eine Speichereinrichtung (241) umfassend, welche die jeweilige Zeitdauer akkumuliert, während der ein Betrieb des Rotors (149) oberhalb der maximal zulässigen Drehzahl (302) erfolgt, um eine Gesamtdauer für den Betrieb des Rotors (149) oberhalb der maximal zulässigen Drehzahl (302) zu ermitteln,
wobei die Einrichtung (229) zur Steuerung der Drehzahl des Rotors (149) ausgebildet ist, um eine Warn- oder Fehlermeldung auszugegeben, wenn die Gesamtdauer eine vorbestimmte Maximaldauer überschreitet.

## Claims

1. A method of regulating the rotational speed of a rotor (149) of a vacuum pump (111), said method comprising
determining a temperature of the rotor (149);
determining a maximum permissible rotational speed (302) of the rotor (149) in dependence on the temperature of the rotor (149); and
regulating an actual rotational speed of the rotor in dependence on the maximum permissible rotational speed (302),
wherein the maximum permissible rotational speed (302) of the rotor (149) is determined while taking account of a maximum permissible material stress (301) of the rotor (149) which is dependent on the temperature of the rotor (149).

2. A method in accordance with claim 1,
wherein the actual rotational speed of the rotor (149) is regulated to the maximum permissible rotational speed (302) of the rotor (149).

3. A method in accordance with claim 1 or claim 2,
wherein the temperature of the rotor (149) is detected directly at the rotor (149).

4. A method in accordance with claim 1 or claim 2,
wherein the temperature of the rotor (149) is estimated indirectly, in particular by a measurement of the temperature at a lower part (121) and/or at a bearing (181) of the vacuum pump (111).

5. A method in accordance with any one of the preceding claims, wherein
a time duration is defined for which an exceeding of the maximum permissible rotational speed (302) of the rotor (149) by the actual rotational speed of the rotor (149) can be tolerated, and
the rotor (149) is operated in a cumulative manner at a rotational speed above the maximum permissible rotational speed (302) until the defined time duration has elapsed.

6. A method in accordance with claim 5, wherein
a total duration of an operation of the rotor (149) above the maximum permissible rotational speed (302) is determined by accumulating the respective time duration during which an operation above the maximum permissible rotational speed (302) takes place, and
a warning or error message is output if the total duration exceeds a predetermined maximum duration.

7. A vacuum pump (111), in particular a turbomolecular pump, comprising a rotor (149) which forms a pump-active unit of the vacuum pump (111) together with a stator;
a device (227) for determining a temperature of the rotor (149); and
a device (229) for regulating the rotational speed of the rotor (149) which is configured to:
receive a temperature of the rotor (149) determined by the device (227) for determining the temperature of the rotor,
to determine a maximum permissible rotational speed (302) of the rotor (149) in dependence on the temperature of the rotor (149), and
to regulate an actual rotational speed of the rotor (149) in dependence on the maximum permissible rotational speed (302), wherein
the device (229) for regulating the rotational speed of the rotor (149) comprises a characteristic curve (301) which puts the temperature of the rotor (149) into relation with a maximum permissible material stress of the rotor (149), and
the device (229) for regulating the rotational speed of the rotor (149) is configured to determine the maximum permissible rotational speed (302) of the rotor (149) while taking account of the maximum permissible material stress of the rotor (149).

8. A vacuum pump (111) in accordance with claim 7,
further comprising a temperature sensor (231) for directly measuring the temperature at the rotor (149).

9. A vacuum pump (111) in accordance with claim 7,
further comprising a module (233) for estimating the temperature of the rotor (149) from signals of a temperature sensor (235) for measuring the temperature at a lower part (121) and/or at a bearing (181) of the vacuum pump (111).

10. A vacuum pump (111) in accordance with any one of the claims 7 to 9,
further comprising a timer (239) which defines a time duration for which an exceeding of the maximum permissible rotational speed (302) of the rotor (149) by the actual rotational speed of the rotor (149) can be tolerated,
wherein the device (229) for regulating the rotational speed of the rotor (149) is configured to operate the rotor (149) at a rotational speed above the maximum permissible rotational speed (302) until the timer (239) has elapsed.

11. A vacuum pump (111) in accordance with claim 10, wherein
the time duration is defined shorter than a critical time duration during which a critical dimensional change of the rotor (149) occurs due to creeping.

12. A vacuum pump (111) in accordance with claim 10 or claim 11,
further comprising a memory device (241) which accumulates the respective time duration during which an operation of the rotor (149) occurs above the maximum permissible rotational speed (302) to determine a total duration for the operation of the rotor (149) above the maximum permissible rotational speed (302),
wherein the device (229) for controlling the rotational speed of the rotor (149) is configured to output a warning or error message when the total duration exceeds a predetermined maximum duration.

## Revendications

1. Procédé de régulation de la vitesse de rotation d'un rotor (149) d'une pompe à vide (111), comprenant les étapes consistant à déterminer une température du rotor (149),
déterminer une vitesse de rotation maximale admissible (302) du rotor (149) en fonction de la température du rotor (149), et
réguler une vitesse de rotation réelle du rotor en fonction de la vitesse de rotation maximale admissible (302),
la vitesse de rotation maximale admissible (302) du rotor (149) étant déterminée en tenant compte d'une contrainte de matériau maximale admissible (301) du rotor (149) qui dépend de la température du rotor (149).

2. Procédé selon la revendication 1,
dans lequel la vitesse de rotation réelle du rotor (149) est régulée à la vitesse de rotation maximale admissible (302) du rotor (149).

3. Procédé selon la revendication 1 ou 2,
dans lequel la température du rotor (149) est détectée directement au niveau du rotor (149).

4. Procédé selon la revendication 1 ou 2,
dans lequel la température du rotor (149) est estimée indirectement, en particulier en mesurant la température au niveau d'une partie inférieure (121) et/ou d'un palier (181) de la pompe à vide (111).

5. Procédé selon l'une des revendications précédentes,
dans lequel
une période de temps est définie pendant laquelle un dépassement de la vitesse de rotation maximale admissible (302) du rotor (149) par la vitesse de rotation réelle du rotor (149) est tolérable, et
le rotor (149) est actionné cumulativement à une vitesse de rotation supérieure à la vitesse de rotation maximale admissible (302) jusqu'à ce que la période de temps définie se soit écoulée.

6. Procédé selon la revendication 5,
dans lequel
une durée totale d'un fonctionnement du rotor (149) au-dessus de la vitesse de rotation maximale admissible (302) est déterminée en accumulant la période de temps respective pendant laquelle un fonctionnement au-dessus de la vitesse de rotation maximale admissible (302) a lieu, et
un message d'avertissement ou d'erreur est émis si la durée totale dépasse une durée maximale prédéterminée.

7. Pompe à vide (111), en particulier pompe turbomoléculaire, comportant un rotor (149) qui, conjointement avec un stator, forme une unité active en pompage de la pompe à vide (111),
un dispositif (227) de détermination d'une température du rotor (149), un dispositif (229) de régulation de la vitesse de rotation du rotor (149), qui est réalisé pour :
recevoir une température du rotor (149) déterminée par le dispositif (227) de détermination de la température du rotor,
déterminer une vitesse de rotation maximale admissible (302) du rotor (149) en fonction de la température du rotor (149),
réguler une vitesse de rotation réelle du rotor (149) en fonction de la vitesse de rotation maximale admissible (302),
dans laquelle
le dispositif (229) de régulation de la vitesse de rotation du rotor (149) comprend une courbe caractéristique (301) mettant en relation la température du rotor (149) avec une contrainte de matériau maximale admissible du rotor (149), et
le dispositif (229) de régulation de la vitesse de rotation du rotor (149) est réalisé pour déterminer la vitesse de rotation maximale admissible (302) du rotor (149) en tenant compte de la contrainte de matériau maximale admissible du rotor (149).

8. Pompe à vide (111) selon la revendication 7,
comprenant en outre un capteur de température (231) pour mesurer directement la température au niveau du rotor (149).

9. Pompe à vide (111) selon la revendication 7,
comprenant en outre un module (233) pour estimer la température du rotor (149) à partir de signaux d'un capteur de température (235) pour mesurer la température au niveau d'une partie inférieure (121) et/ou d'un palier (181) de la pompe à vide (111).

10. Pompe à vide (111) selon l'une des revendications 7 à 9, comprenant en outre une minuterie (239) définissant une période de temps pendant laquelle un dépassement de la vitesse de rotation maximale admissible (302) du rotor (149) par la vitesse de rotation réelle du rotor (149) est tolérable,
le dispositif (229) de régulation de la vitesse de rotation du rotor (149) étant réalisé pour faire fonctionner le rotor (149) à une vitesse de rotation supérieure à la vitesse de rotation maximale admissible (302) jusqu'à l'expiration de la minuterie (239).

11. Pompe à vide (111) selon la revendication 10,
dans laquelle
la période de temps est définie comme étant plus courte qu'une période de temps critique à laquelle un changement dimensionnel critique du rotor (149) dû au fluage se produit.

12. Pompe à vide (111) selon la revendication 10 ou 11,
comprenant en outre un dispositif de mémoire (241) qui accumule la période de temps respective pendant laquelle un fonctionnement du rotor (149) au-dessus de la vitesse de rotation maximale admissible (302) a lieu, afin de déterminer une durée totale pour le fonctionnement du rotor (149) au-dessus de la vitesse de rotation maximale admissible (302),
le dispositif (229) de régulation de la vitesse de rotation du rotor (149) étant réalisé pour émettre un message d'avertissement ou d'erreur lorsque la durée totale dépasse une durée maximale prédéterminée.
